# EUROPÄISCHE PATENTSCHRIFT

(11) **EP 4 135 925 B1**
(45) Veröffentlichungstag und Bekanntmachung des Hinweises auf die Patenterteilung: **10.06.2026**
(21) Anmeldenummer: 21719555.1
(22) Anmeldetag: 13.04.2021
(51) Int. Cl.: B23K 11/00, B23K 11/11, B23K 11/30, B60N 2/06, B60N 2/07, B23K 35/02

(54) **VERFAHREN ZUM VERBINDEN EINES SPINDELHALTEELEMENTS MIT EINER FÜHRUNGSSCHIENE, UND LÄNGSVERSTELLEINRICHTUNG FÜR EINEN FAHRZEUGSITZ**
METHODS OF CONNECTING A SPINDLE HOLDING ELEMENT TO A GUIDE RAIL, AND LONGITUDINAL ADJUSTMENT DEVICE FOR A VEHICLE SEAT
PROCÉDÉS DE RACCORDEMENT D'UN ÉLÉMENT DE MAINTIEN DE BROCHE À UN RAIL DE GUIDAGE, ET DISPOSITIF DE RÉGLAGE LONGITUDINAL D'UN SIÈGE DE VÉHICULE

(30) Priorität: 15.04.2020 DE 102020204755
(43) Veröffentlichungstag der Anmeldung: 22.02.2023
(73) Patentinhaber: Brose Fahrzeugteile SE & Co. Kommanditgesellschaft, Coburg, 96450 Coburg (DE)
(72) Erfinder: WILK, Bodo, 96472 Rödental (DE); ESCHER, Bernd, 96486 Lautertal (DE)
(74) Vertreter: Maikowski & Ninnemann Patentanwälte Partnerschaft mbB
(86) Internationale Anmeldenummer: PCT/EP2021/059490
(87) Internationale Veröffentlichungsnummer: WO 2021/209411

(56) Entgegenhaltungen:
- DE-A1- 102015 205 440
- DE-A1- 102018 212 288
- JP-A- 2015 067 146
- JP-A- S62 227 831
- US-A1- 2017 166 090

## Beschreibung

Die Erfindung betrifft Verfahren zum Verbinden eines Spindelhalteelements mit einer Führungsschiene zum Herstellen einer Längsverstelleinrichtung für einen Fahrzeugsitz und eine Längsverstelleinrichtung für einen Fahrzeugsitz, siehe Ansprüche 1, 3 und 11.

Bei einem derartigen Verfahren wird das Spindelhalteelement zum Befestigen einer Spindel mit einem Wandungsabschnitt der Führungsschiene stoffschlüssig verbunden.

Eine Längsverstelleinrichtung dient dazu, einen Fahrzeugsitz in seiner Längsposition in einem Fahrzeug verstellen zu können. Bei einer Längsverstelleinrichtung ist ein Fahrzeugsitz beispielsweise über zwei Führungsschienenpaare beidseitig des Fahrzeugsitzes verschiebbar zu einem Fahrzeugboden angeordnet derart, dass durch Verschieben von Oberschienen der Führungsschienenpaare zu Unterschienen der Führungsschienenpaare die Längsposition des Fahrzeugsitzes verstellt werden kann.

Solche Längsverstelleinrichtungen verwenden üblicherweise einen Spindelantrieb, bei dem, in einer Ausgestaltung, eine Spindel feststehend an einer zugeordneten Führungsschiene festgelegt ist und mit einer Spindelmutter eines mit der anderen Führungsschiene verbundenen Verstellgetriebes in Gewindeeingriff steht. Bei Antreiben der Spindelmutter verdreht sich die Spindelmutter zur Spindel und wird unter Wirkung des Gewindeeingriffs längs entlang der Spindel verstellt, sodass die Führungsschienen relativ zueinander verschoben werden.

Bei der Verbindung der Spindel mit der zugeordneten Führungsschiene ist sicherzustellen, dass die Spindel auch bei großen Belastungen, insbesondere in einem Crashfall, sichern an der zugeordneten Führungsschiene gehalten wird und nicht von der Führungsschiene abreißen kann. Die Verbindung der Spindel mit der zugeordneten Führungsschiene unterliegt daher hohen Festigkeitsanforderungen.

Zudem soll die Spindel eine definierte Lage zu der zugeordneten Führungsschiene einnehmen und insbesondere in einer definierten Höhe (in Z-Richtung), aber auch in einer definierten Längs- und Querposition (in X- und Y-Richtung) zu der Führungsschiene gehalten werden, um einen leisen und leichtgängigen Verstellbetrieb zu gewährleisten. Hierzu ist erforderlich, dass die Spindel trotz gegebenenfalls bestehender Toleranzen eine definierte Lage zu der zugeordneten Führungsschiene einnimmt.

Bei einer aus der DE 10 2004 001 593 B3 bekannten Längsverstelleinrichtung ist eine Spindel an zwei Enden jeweils mit einem zugeordneten Befestigungselement in Form eines Haltewinkels verschweißt und darüber an den Befestigungselementen festgelegt.

Bei einer aus der WO 2016/150791 A1 bekannten Längsverstelleinrichtung ist eine Spindel an ihren Enden über Spindelhalter mit einer zugeordneten Führungsschiene verbunden. Die Spindelhalter weisen jeweils zwei Flansche auf, zwischen denen die Spindel aufgenommen ist und die durch Schweißverbindungen mit der Spindel verbunden sind.

Aus der DE 10 2018 212 288 A1 (offenbarend den Oberbegriff der Ansprüche 1, 3 und 11) ist ein Verfahren zum Verbinden einer Spindel mit einem Spindelhalteelement zum Herstellen einer Längsverstelleinrichtung für einen Fahrzeugsitz bekannt, bei dem die Spindel stoffschlüssig mit dem Spindelhalteelement unter Verwendung eines Widerstandsschweißverfahrens verbunden wird.

Die JP 2015-067146 A offenbart eine Längsverstelleinrichtung eines Fahrzeugsitzes, die eine obere Führungsschiene und eine untere Führungsschiene aufweist. Eine Spindel ist an der unteren Führungsschiene über ein Spindelhalteelement angeordnet. An der Spindel ist eine Spindelmutter angeordnet, die drehbar an der oberen Führungsschiene gelagert ist, sodass durch Verdrehen der Spindelmutter die obere Führungsschiene relativ zu der unteren Führungsschiene verschoben werden kann.

Eine andere Längsverstelleinrichtung unter Verwendung eines Spindelgetriebes zum Längsverstellen eines Fahrzeugsitzes ist aus der JP S62227831 A bekannt.

Aufgabe der vorliegenden Erfindung ist es, ein Verfahren zum Verbinden eines Spindelhalteelements mit einer Führungsschiene zum Herstellen einer Längsverstelleinrichtung für einen Fahrzeugsitz und eine Längsverstelleinrichtung für einen Fahrzeugsitz zur Verfügung zu stellen, die eine feste Verbindung einer Spindel über ein oder mehrere Spindelhalteelemente mit einer Führungsschiene ermöglichen, bei einfach zu handhabendem und zu überwachendem Herstellungsprozess.

Diese Aufgabe wird durch einen Gegenstand mit den Merkmalen des Anspruchs 1 und des Anspruchs 3 gelöst.

Demnach wird das Spindelhalteelement unter Verwendung eines Widerstandsschweißverfahrens mit dem Wandungsabschnitt der Führungsschiene verbunden.

Über das Spindelhalteelement soll eine Spindel an einer zugeordneten Führungsschiene einer Längsverstelleinrichtung derart festgelegt werden, dass die Spindel zuverlässig und belastbar mit der Führungsschiene verbunden ist. Die Anbindung der Spindel an die Führungsschiene erfolgt hierbei dadurch, dass das Spindelhalteelement stoffschlüssig mit einem Wandungsabschnitt der Führungsschiene, insbesondere einem Boden einer im Querschnitt im Wesentlichen U-förmig ausgebildeten Führungsschiene, verbunden wird, sodass das Spindelhalteelement belastbar an dem Wandungsabschnitt der Führungsschiene befestigt wird.

Zum Herstellen der stoffschlüssigen Verbindung wird ein Widerstandsschweißverfahren eingesetzt, im Rahmen dessen ein Schweißstrom zwischen dem Spindelhalteelement und der Führungsschiene geleitet wird, um auf diese Weise am Übergang zwischen der dem Spindelhalteelement und der Führungsschiene über eine dort wirkende Stromdichte eine Schweißverbindung herzustellen.

Grundsätzlich sind unterschiedliche Widerstandsschweißverfahren einsetzbar. So kann zum Beispiel ein Widerstandspunktschweißen verwendet werden, bei dem eine Stromdichte über näherungsweise punktförmige Schweißelektroden eingestellt wird. Alternativ kann ein Widerstandsbuckelschweißverfahren eingesetzt werden, bei dem eine zum Schweißen notwendige Stromdichte durch die geometrische Form der miteinander zu verbindenden Bauteile generiert wird. Jeweils werden das Spindelhalteelement und die Führungsschiene im Rahmen des Verfahrens zur Verbindung vorteilhafterweise unter Kraftwirkung zueinander gehalten und über einen Schweißstrom miteinander verschweißt.

Das Widerstandsschweißen erfolgt vorteilhafterweise ohne Zufuhr eines Zusatzwerkstoffs. Beim Widerstandsschweißen werden das Spindelhalteelement und die Führungsschiene an ihren einander zugewandten Seiten aufgeschmolzen, sodass auf diese Weise ein Stoffschluss zwischen dem Spindelhalteelement unter Führungsschiene hergestellt wird. Hierbei setzt sich das Spindelhalteelement zu der Führungsschiene, was einen einfachen und vorteilhaften Toleranzausgleich für eine definierte Lage des Spindelhalteelements und damit einer an dem Spindelhalteelement anzuordnenden Spindel zu der Führungsschiene ermöglicht.

Die Lage der Spindel zu der Führungsschiene entlang einer Höhenrichtung (Z-Richtung) kann hierbei über das Setzverhalten des Spindelhalteelements beim Widerstandsschweißen eingestellt werden. Die Lage des Spindelhalteelements zu der Führungsschiene in Längsrichtung (X-Richtung) und Querrichtung (Y-Richtung) kann demgegenüber durch eine vorgegebene Lage des Spindelhalteelements zu der Führungsschiene im Schweißwerkzeug eingestellt werden.

Bei dem Widerstandsschweißverfahren entsprechend der Erfindung werden eine erste Schweißelektrode an das Spindelhalteelement und eine zweite Schweißelektrode an die Führungsschiene angesetzt. Über die erste Schweißelektrode und die zweite Schweißelektrode wird ein elektrischer Schweißstrom zwischen der ersten Schweißelektrode und der zweiten Schweißelektrode durch das Spindelhalteelement und die Führungsschiene geleitet, sodass sich am Übergang zwischen dem Spindelhalteelement und der Führungsschiene eine große Stromdichte einstellt und aufgrund des Schweißstroms eine Schweißverbindung am Übergang zwischen der dem Spindelhalteelement und der Führungsschiene geschaffen wird.

Über die erste Schweißelektrode und die zweite Schweißelektrode werden das Spindelhalteelement und die Führungsschiene zum Beispiel auch mit einer vorbestimmten Anpresskraft gegeneinander gepresst, sodass die Herstellung der Schweißverbindung unter Kraftwirkung zwischen dem Spindelhalteelement und der Führungsschiene erfolgt.

Die erste Schweißelektrode kann beispielsweise an eine dem Wandungsabschnitt der Führungsschiene abgewandte Seite des Spindelhalteelements angesetzt werden. Die erste Schweißelektrode kann hierbei eine flache Anlagefläche zum Anliegen an einer dem Wandungsabschnitt der Führungsschiene abgewandten Kante des Spindelhalteelements aufweisen. Ebenso ist aber auch denkbar und möglich, dass die erste Schweißelektrode im Bereich ihrer Anlagefläche zum Beispiel gekrümmt oder in sonstiger Weise abweichend von einer linearen Erstreckung geformt ist, um die Schweißelektrode einer Formgebung des Spindelhalteelements anzupassen und somit eine flächige Anlage der ersten Schweißelektrode an dem Spindelhalteelement zu ermöglichen.

Die erste Schweißelektrode weist (entsprechend eines ersten Aspektes der Erfindung ; siehe Anspruch 1) eine Aufnahmeöffnung auf, in der das Spindelhalteelement zum Einleiten des Schweißstroms aufgenommen wird. Die Aufnahmeöffnung kann beispielsweise nach Art eines Schlitzes geformt sein, der in die erste Schweißelektrode eingeformt ist und derart geformt ist, dass das Spindelhalteelement in der Aufnahmeöffnung aufgenommen und in flächige Anlage mit der ersten Schweißelektrode gebracht werden kann. Die erste Schweißelektrode kann hierbei zur einseitigen oder zweiseitigen flächigen Anlage an dem Spindelhalteelement ausgestaltet sein. Insbesondere kann die Schweißelektrode in einer vorteilhaften Ausgestaltung flächig mit einem Flächenabschnitt des Spindelhalteelements, der quer zu einer Längsachse der über das Spindelhalteelement zu haltenden Spindel erstreckt ist, in Anlage gebracht werden. Die Anlage kann einseitig an dem Flächenabschnitt erfolgen. Vorteilhaft kann aber sein, die Schweißelektrode beidseitig mit dem Flächenabschnitt in Anlage zu bringen, um einen Schweißstrom beidseitig in das Spindelhalteelement einzuleiten. Insbesondere durch eine beidseitige Anlage der Schweißelektrode an dem Spindelhalteelement kann beispielsweise eine hochfeste Verbindung des Spindelhalteelements mit der Führungsschiene erreicht werden.

Nach einem weiteren Aspekt der Erfindung (siehe Anspruch 3) wird das Spindelhalteelement unter Verwendung eines Widerstandsschweißverfahrens mit dem Wandungsabschnitt der Führungsschiene verbunden, wobei bei dem Widerstandsschweißverfahren eine erste Schweißelektrode an das Spindelhalteelement und eine zweite Schweißelektrode an die Führungsschiene angesetzt wird, um einen elektrischen Schweißstrom zwischen der ersten Schweißelektrode und der zweiten Schweißelektrode zu leiten. Die erste Schweißelektrode weist einen ersten Elektrodenabschnitt und einen zweiten Elektrodenabschnitt auf, zwischen denen das Spindelhalteelement zum Einleiten des Schweißstroms angeordnet wird. Der erste Elektrodenabschnitt kann mit einer ersten Seite des Spindelhalteelements in Anlage gebracht werden, während der zweite Elektrodenabschnitt mit einer der ersten Seite abgewandten, zweiten Seite des Spindelhalteelements in Anlage gebracht wird. Über die Elektrodenabschnitte kann somit eine beidseitige Anlage an dem Spindelhalteelement, insbesondere an einander abgewandten Seiten eines quer zur Längsachse der Spindel erstreckten Flächenabschnitts des Spindelhalteelements, bewirkt werden, sodass ein Schweißstrom beidseitig in das Spindelhalteelement eingeleitet werden kann.

In einer Ausgestaltung sind die Elektrodenabschnitte über eine Spanneinrichtung zueinander spannbar, sodass die Elektrodenabschnitte in klemmender Weise mit dem zwischen den Elektrodenabschnitten aufgenommenen Spindelhalteelement in Anlage gebracht werden können. Die Spanneinrichtung kann beispielsweise einen Spannbolzen aufweisen, der mit einem Schaftende in eine Öffnung des Spindelhalteelements, die an sich zur Aufnahme der Spindel dient, eingreift und somit das Spindelhalteelement zu der ersten Schweißelektrode positioniert. Über einen Spannbolzen können die Elektrodenabschnitte zueinander gespannt werden, sodass die Elektrodenabschnitte in gespannter Weise zur Einleitung des Schweißstroms in Anlage mit einander abgewandten Seiten des Spindelhalteelements gebracht werden.

In einer Ausgestaltung des Verfahrens kann die zweite Schweißelektrode beispielsweise an eine dem Spindelhalteelement abgewandte Seite des Wandungsabschnitts der Führungsschiene angesetzt werden. Denkbar ist hierbei, die zweite Schweißelektrode an einem solchen Ort rückseitig des Wandungsabschnitts, also an der dem Spindelhalteelement abgewandten Seite des Wandungsabschnitts, anzusetzen, der dem axialen Ort des Ansetzens des Spindelhalteelements an den Wandungsabschnitt entspricht, sodass die zweite Schweißelektrode dem Spindelhaltelement gegenüberliegt. Es ergibt sich ein vergleichsweise kurzer Stromweg durch den Wandungsabschnitt hindurch. Alternativ ist aber auch denkbar, dass die zweite Schweißelektrode axial versetzt zu dem Spindelhalteelement an die Führungsschiene angesetzt wird.

In einer Ausgestaltung weist das Spindelhalteelement einen Flächenabschnitt mit einer daran geformten Stirnkante auf. Das Spindelhalteelement wird zum Verbinden mit der Führungsschiene stumpf mit der Stirnkante an den Wandungsabschnitt der Führungsschiene angesetzt und über die Stirnkante unter Verwendung des Widerstandsschweißverfahrens mit dem Wandungsabschnitt der Führungsschiene stoffschlüssig verbunden.

Das Spindelhalteelement kann hierzu beispielsweise als Stanzteil geformt sein und weist eine Plattenform auf, sodass sich das Spindelhalteelement mit dem Flächenabschnitt im Wesentlichen entlang einer flachen Ebene erstreckt. Die Verbindung mit dem Wandungsabschnitt der Führungsschiene erfolgt durch stumpfes Aufsetzen der an dem Flächenabschnitt geformten Stirnkante an den Wandungsabschnitt der Führungsschiene.

Das Spindelhalteelement erstreckt sich in einer Ausgestaltung quer zu einer Längsachse, entlang der die Spindel längserstreckt ist, und wird so an den Wandungsabschnitt der Führungsschiene angesetzt, dass sich bei mit dem Spindelhalteelement verbundener Spindel die Spindelmutter längs entlang der Führungsschiene erstreckt, die Längsachse der Spindel somit parallel zur Führungsschiene aus gerichtet ist.

In einer Ausgestaltung weist, insbesondere bei Verwendung eines Widerstandsbuckelschweißverfahrens, das Spindelhalteelement an der Stirnkante zumindest einen Buckelabschnitt auf, mit dem das Spindelhalteelement beim Ansetzen mit dem Wandungsabschnitt in Anlage gebracht wird, um im Bereich des Buckelabschnitts eine Schweißverbindung herzustellen. Beim Widerstandsbuckelschweißen wird das Spindelhalteelement insbesondere im Bereich des Buckelabschnitts aufgeschmolzen, sodass ein Stoffschluss über den Buckelabschnitt hergestellt wird.

Vorteilhafterweise weist das Spindelhalteelement hierbei mehrere Buckelabschnitte auf, die jeweils paarweise durch einen dazwischen geformten zurückgesetzten Abschnitt voneinander getrennt und beispielsweise entlang einer Querrichtung quer zur Längsachse aneinander angereiht sind. Die Buckelabschnitte stehen von dem Flächenabschnitt in Richtung des Wandungsabschnitts vor und dienen zur Anlage an dem Wandungsabschnitt. Beim Widerstandsschweißen wird eine stoffschlüssige Verbindung im Bereich der Buckelabschnitte hergestellt.

Durch Verwenden eines oder mehrerer an der Stirnkante des Flächenabschnitts des Spindelhalteelements geformter Buckelabschnitte ergibt sich der Vorteil eines günstigen Setzverhaltens beim Widerstandsschweißen. So kann durch Aufschmelzen im Bereich der Buckelabschnitte sich das Spindelhalteelement so zu dem Wandungsabschnitt setzen, dass eine definierte Höhe des Spindelhalteelements zur Anbindung der Spindel an der Führungsschiene eingestellt werden kann.

In einer Ausgestaltung wird beim Herstellen der Verbindung zwischen dem Spindelhalteelement und der Führungsschiene eine nominelle Höhe einer Öffnung des Spindelhalteelements, die zum Befestigen der Spindel an dem Spindelhalteelement ausgebildet ist, relativ zum Wandungsabschnitt der Führungsschiene eingestellt. Die nominelle Höhe kann hierbei beim Setzen des Spindelhalteelements relativ zu dem Wandungsabschnitt der Führungsschiene eingestellt werden, sodass Toleranzen in der Formgebung des Spindelhalteelements und des Wandungsabschnitts, insbesondere im Bereich der Buckelabschnitte, ausgeglichen werden können und keinen Einfluss auf die Lage des Spindelhalteelements zu der Führungsschiene haben.

Zur Einstellung der nominellen Höhe der Öffnung kann, in einer Ausgestaltung, zum Beispiel der Abstand zwischen den Schweißelektroden beim Schweißen als Abschaltkriterium überwacht werden. Der Abstand zwischen den Schweißelektroden hängt zusammen mit der Höhenlage des Spindelhalteelements zu der Führungsschiene. Durch Überwachen des Abstands zwischen der ersten Schweißelektrode und der zweiten Schweißelektrode kann das Spindelhalteelement somit in eine definierte Höhenlage zu der Führungsschiene gebracht werden, sodass die Spindel nach Befestigen an dem Spindelhalteelement eine definierte Höhenposition zu der Führungsschiene einnimmt.

Im Rahmen der Prozesssteuerung kann beispielsweise der Abstand zwischen den Schweißelektroden beim Widerstandschweißen mit einem vorbestimmten Abstandswert verglichen werden, um den Schweißstrom abzuschalten, sobald der Abstand zwischen den Schweißelektroden dem vorbestimmten Abstandswert entspricht. Ist der vorbestimmte Abstandswert erreicht, wird der Schweißprozess somit beendet. Eine solche Steuerung des Schweißprozesses ermöglicht einen genauen Toleranzausgleich insbesondere für die Höhenposition des Spindelhalteelements zu der zugeordneten Führungsschiene.

Denkbar und möglich ist, eine solche Steuerung bei der Verbindung eines jeden Spindelhalteelements mit einer zugeordneten Führungsschiene bei der Serienfertigung einzusetzen und somit den Schweißprozess bei der Verbindungsherstellung zu steuern. Denkbar und möglich ist aber auch, eine solche Steuerung im Rahmen einer initialen Kalibrierung einzusetzen, um eine Schweißdauer festzulegen, die sodann bei der späteren Serienfertigung verwendet wird. Die spätere Serienfertigung, im Rahmen derer Spindelhalteelemente mit zugeordneten Führungsschienen verbunden werden, kann dann ohne Prozessüberwachung, also ohne Überwachung des Abstands zwischen den Schweißelektroden, erfolgen.

Für das Widerstandsschweißen können unterschiedliche Parameter eingestellt werden, um anhand der Parameter die Güte der Schweißverbindung, insbesondere deren Festigkeit zu beeinflussen. So kann ein Schweißstrom zum Beispiel auf einen Wert in einem Bereich zwischen 5 kA und 25 kA, beispielsweise zwischen 10 kA und 20 kA, eingestellt werden. Eine Anpresskraft, mit der das Spindelhalteelement und die Führungsschiene über die Schweißelektroden gegeneinander gepresst werden, kann zum Beispiel in einem Bereich zwischen 100 daN (Dekanewton) und 1000 daN, vorzugsweise zwischen 400 daN und 900 daN, eingestellt werden. Eine Stromzeit, über die der Schweißstrom bei dem Widerstandschweißverfahren angelegt wird, kann beispielsweise auf einen Wert in einem Bereich zwischen 10 ms und 200 ms, vorzugsweise zwischen 30 ms und 100 ms, zum Beispiel 50 ms, eingestellt werden. Sämtliche Werte können vorab eingestellt werden, zum Beispiel anhand einer initialen Kalibrierung und Werkstoffprüfung. Denkbar und möglich ist aber auch, die Prozessparameter bei dem Schweißprozess in gesteuerter Weise zu variieren, zum Beispiel die Anpresskraft und/oder die Stromzeit in Abhängigkeit von einer Steuerung anhand des Abstands der Schweißelektroden zueinander.

Durch das Verwenden einer kurzen Stromzeit, insbesondere einer Stromzeit gleich oder kleiner als 50 ms, ergibt sich insbesondere, dass unterschiedliche Materialien belastbar miteinander verbunden werden können. Beispielsweise wird ermöglicht, sehr harte Materialien, beispielsweise ein hartes Stahlmaterial des Spindelhalteelements, mit weicheren Materialien, beispielsweise einem weicheren Material der Führungsschiene, stoffschlüssig zu verbinden.

Die Aufgabe wird auch gelöst durch eine Längsverstelleinrichtung mit einer Führungsschiene entsprechend Anspruch 11, mit einer mit der Führungsschiene verbundenen, entlang einer Längsachse erstreckten Spindel und einem Spindelhalteelement, über das die Spindel mit der Führungsschiene verbunden ist. Dabei ist vorgesehen, dass das Spindelhalteelement unter Verwendung eines Widerstandsschweißverfahrens mit einem Wandungsabschnitt der Führungsschiene verbunden ist, wobei das Spindelhalteelement einen Flächenabschnitt mit einer daran angeordneten Stirnkante aufweist, wobei das Spindelhalteelement mit der Stirnkante stumpf an den Wandungsabschnitt der Führungsschiene angesetzt ist.

Die vorangehend für das Verfahren beschriebenen Vorteile und vorteilhaften Ausgestaltungen finden analog auch auf die Längsverstelleinrichtung Anwendung, sodass diesbezüglich auf das vorangehend Ausgeführte verwiesen werden soll.

Der der Erfindung zugrunde liegende Gedanke soll nachfolgend anhand der in den Figuren dargestellten Ausführungsbeispiele näher erläutert werden. Es zeigen:
- Fig. 1: eine schematische Ansicht einer Längsverstelleinrichtung für einen Fahrzeugsitz;
- Fig. 2: eine Ansicht eines Spindelhalteelements zum Befestigen einer Spindel an einer zugeordneten Führungsschiene;
- Fig. 3: eine Ansicht des Spindelhalteelements an einem Wandungsabschnitt der zugeordneten Führungsschiene;
- Fig. 4: eine stirnseitige Ansicht der Anordnung gemäß Fig. 3;
- Fig. 5: eine teilweise freigeschnittene Seitenansicht der Anordnung gemäß Fig. 3, darstellend das Spindelhalteelement an einem Wandungsabschnitt der Führungsschiene;
- Fig. 6: eine ausschnittsweise vergrößerte Ansicht der Ansicht gemäß Fig. 5;
- Fig. 7: eine vergrößerte Ansicht eines Ausschnitts der Ansicht gemäß Fig. 6;
- Fig. 8: eine Ansicht einer Schweißeinrichtung zum Verbinden des Spindelhalteelements mit der Führungsschiene;
- Fig. 9: eine Ansicht der Schweißeinrichtung gemäß Fig. 8, ohne eine zweite Schweißelektrode und mit der Führungsschiene in transparenter Ansicht;
- Fig. 10: eine Ansicht einer Spanneinrichtung der Schweißeinrichtung;
- Fig. 11: eine gesonderte Ansicht einer ersten Schweißelektrode mit einem daran aufgenommenen Spindelhalteelement;
- Fig. 12: eine Ansicht eines Spannbolzens der Spanneinrichtung; und
- Fig. 13: eine vergrößerte Ansicht eines Schaftendes des Spannbolzens mit einem daran angeordneten Spindelhalteelement.

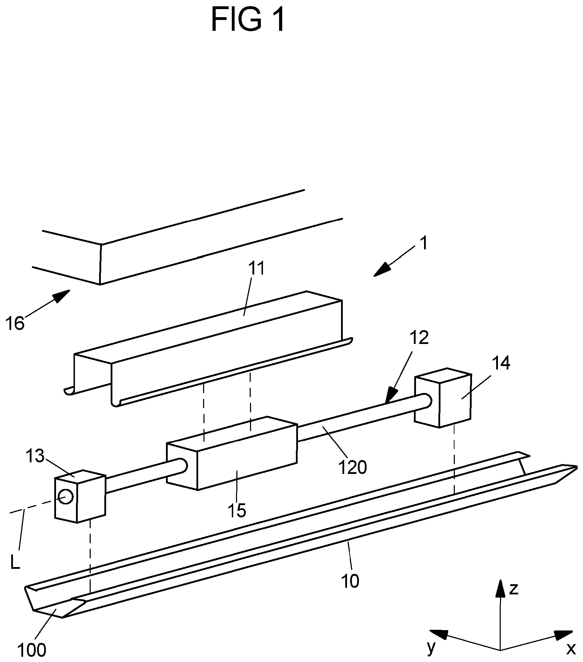

Fig. 1 zeigt ein Ausführungsbeispiel einer Längsverstelleinrichtung 1, die zum Längsverstellen eines (in Fig. 1 nur schematisch dargestellten) Fahrzeugsitzes 16 entlang einer Fahrzeuglängsrichtung X in einem Fahrzeug dient.

Die Längsverstellrichtung 1 weist üblicherweise zwei Führungsschienenpaare, gebildet jeweils durch Führungsschienen 10, 11, auf, von denen eine obere Führungsschiene 11 dem Fahrzeugsitz 16 und eine untere Führungsschiene 10 dem Fahrzeugboden zugeordnet ist. Durch Längsverstellen der Führungsschienen 10, 11 zueinander kann die Längsposition des Fahrzeugsitzes 16 im Fahrzeug angepasst werden.

Das Verstellen der Führungsschienen 10, 11 zueinander erfolgt hierbei elektromotorisch über einen Spindelantrieb, der bei dem dargestellten Ausführungsbeispiel für jedes Führungsschienenpaar eine an der unteren Führungsschiene 10 festgelegte Spindel 12 und ein an der oberen Führungsschiene 11 befestigtes Verstellgetriebe 15 aufweist. Die Spindel 12 ist über Spindelhalteelemente 13, 14 feststehend und somit drehfest an der unteren Führungsschiene 10 gehalten und weist ein Außengewinde 120 auf, über das die Spindel 12 mit einer Spindelmutter des Verstellgetriebes 15 in Gewindeeingriffe steht derart, dass durch elektromotorisches Antreiben die Spindelmutter in eine Drehbewegung zu der Spindel 12 versetzt werden kann und dadurch an der Spindel 12 über den Gewindeeingriff abrollt, sodass das Verstellgetriebe 15 längs entlang einer Längsachse L, entlang derer die Spindel 12 erstreckt ist, zu der Spindel 12 verstellt wird und somit die obere Führungsschiene 11 zu der unteren Führungsschiene 10 entlang der Längsachse L verschoben wird.

Bei dem dargestellten Ausführungsbeispiel ist die Spindel 12 über Spindelhalteelemente 13, 14 fest mit der unteren Führungsschiene 10 verbunden und dazu über die Spindelhalteelemente 13, 14 an einem Boden 100 der unteren Führungsschiene 10 festgelegt.

Während die Spindel 12 in das Spindelhalteelement 13 zum Beispiel eingeschraubt und dadurch mit dem Spindelhalteelement 13 verbunden ist, ist die Spindel 12 mit dem anderen Spindelhalteelement 14 beispielsweise verschweißt, sodass die Spindel 12 drehfest zu Führungsschiene 10 festgelegt ist.

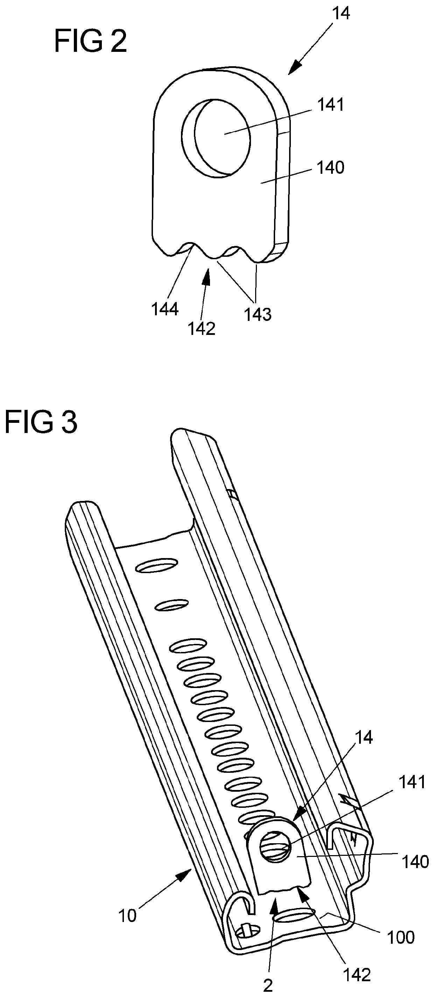

Fig. 2 zeigt ein Ausführungsbeispiel eines Spindelhalteelements 14, das plattenförmig zum Beispiel als Stanzteil ausgebildet und beispielsweise aus einem Stahlmaterial gefertigt ist. Das Spindelhalteelement 14 weist einen Flächenabschnitt 140 auf, der sich - bei montierter Längsverstelleinrichtung 1 - quer zur Längsachse L der Spindel 12 erstreckt und - wie in Fig. 3 bis 7 dargestellt - mit einem Wandungsabschnitt in Form eines Bodens 100 der Führungsschiene 10 derart verbunden ist, dass das Spindelhalteelement 14 von dem Boden 100 vorsteht und dabei belastbar an den Boden 100 angebunden ist.

Der Flächenabschnitt 140 bildet eine Öffnung 141 auf, in die die Spindel 12 zur Befestigung an dem Spindelhalteelement 14 eingesetzt wird. Die Spindel 12 kann hierbei beispielsweise durch Schweißen in der Öffnung 141 befestigt werden, sodass in montierter Stellung die Spindel 12 drehfest zu dem Spindelhalteelement 14 festgelegt ist. Alternativ kann über die Öffnung 141 auch eine Schraubverbindung zwischen der Spindel 12 und dem Spidnelhaltelement14 hergestellt werden.

Der Flächenabschnitt 140 ist durch eine Stirnkante 142 begrenzt, mit der das Spindelhalteelement 14 zum Verbinden mit der Führungsschiene 10 an den Boden 100 angesetzt wird, um eine Schweißverbindung 2 zwischen dem Spindelhalteelement 14 und dem Boden 100 der Führungsschiene 10 herzustellen. Das Verbinden des Spindelhalteelements 14 mit dem Boden 100 erfolgt hierbei unter Verwendung eines Widerstandsschweißverfahrens, insbesondere eines Widerstandsbuckelschweißens, im Rahmen dessen die Schweißverbindung 12 hergestellt und somit eine stumpfe Verbindung des Spindelhalteelements 14 mit der Führungsschiene 10 geschaffen wird.

An der Stirnkanten 142 des Spindelhalteelements 14 sind Buckelabschnitte 143 geformt, die entlang einer quer zur Längsachse L erstreckten Querrichtung Y regelmäßig zueinander beabstandet und paarweise jeweils durch einen dazwischenliegenden zurückgesetzten Abschnitt 144 voneinander getrennt sind. Die Buckelabschnitte 143 stehen in Richtung des Bodens 100 relativ zu den zurückgesetzten Abschnitten 144 vor, sodass bei Ansetzen des Spindelhalteelements 14 an den Boden 100 zur Herstellung der Verbindung zwischen dem Spindelhaltelement 14 und der Führungsschiene 10 die Buckelabschnitte 143 in Anlage mit dem Boden 100 gelangen.

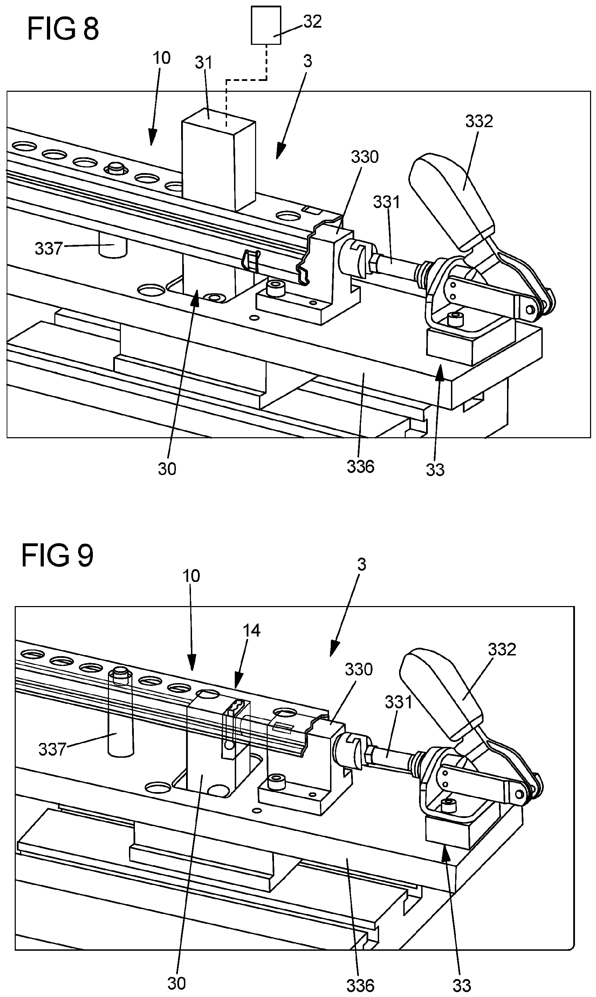

Die Schweißverbindung 2 zwischen dem Spindelhalteelement 14 und dem Boden 100 der Führungsschiene 10 wird unter Verwendung einer in Fig. 8 bis 13 dargestellten Schweißeinrichtung 3 durch ein Widerstandsschweißverfahren hergestellt, im Rahmen dessen ein Schweißstrom über Schweißelektroden 30, 31 durch das Spindelhalteelement 14 und den Boden 100 geleitet wird, wie dies in Fig. 8 dargestellt ist. Eine erste Schweißelektrode 30 liegt an dem Spindelhalteelement 14 an, während eine zweite Schweißelektrode 31 rückseitig des Bodens 100 der Führungsschiene 10 anliegt, um einen Schweißstrom zwischen den Schweißelektroden 30, 31 und somit zwischen dem Spindelhalteelement 14 und dem Boden 100 zur Herstellung der Schweißverbindung 2 zu leiten.

Wird zur Herstellung der Schweißverbindung 2 ein Schweißstrom über die Schweißelektroden 30, 31 durch das Spindelhalteelement 14 und den Boden 100 geleitet, stellt sich am Übergang zwischen dem Spindelhalteelement 14 und dem Boden 100 im Bereich der Buckelabschnitt 143, mit denen das Spindelhalteelement 14 am Boden 100 anliegt, eine derart große Stromdichte ein, dass die Buckelabschnitte 143 des Spindelhalteelements 14 und der Boden 100 im Bereich des Übergangs aufgeschmolzen werden und somit eine stoffschlüssige Verbindung zwischen dem Spindelhalteelement 14 und dem Boden 100 hergestellt wird.

Über die Schweißelektroden 30, 31 werden das Spindelhalteelement 14 und der Boden 100 mit einer Anpresskraft beaufschlagt, sodass das Spindelhalteelement 14 gegen den Boden 100 gepresst wird, was dazu führt, dass das Spindelhalteelement 14 und der Boden 100 sich beim Schweißen zueinander setzen. Dies ermöglicht, Toleranzen auszugleichen und eine Höhenposition des Spindelhalteelements 14 zu dem Boden 100 und damit zu der zugeordneten Führungsschiene 10 in exakter Weise einzustellen.

Die Schweißelektroden 30, 31 sind Bestandteil einer Schweißeinrichtung 3, die eine Steuereinrichtung 32 zum Steuern des Schweißprozesses aufweist. Über die Steuereinrichtung 32 wird insbesondere der Schweißstrom durch die Schweißelektroden 30, 31 gesteuert und zudem die über die Schweißelektroden 30, 31 auf das Spindelhalteelement 14 und den Boden 100 ausgeübte Anpresskraft F eingestellt.

Über die Steuereinrichtung 32 kann der Schweißstrom insbesondere auf einen Wert in einem Bereich zwischen 5 kA und 25 kA, vorzugsweise zwischen 10 kA und 20 kA, beispielsweise zwischen 13 kA und 18 kA, eingestellt werden. Die Anpresskraft kann beispielsweise auf einen Wert zwischen 100 daN und 1000 daN, vorzugsweise zwischen 400 daN und 900 daN, beispielsweise zwischen 500 daN und 800 daN, eingestellt werden. Über die Steuereinrichtung 32 kann zudem die Haltezeit für die Anpresskraft und zudem die Stromzeit für den Schweißstrom I eingestellt und gesteuert werden.

Über die Schweißelektroden 30, 31 wird der Schweißstrom derart eingespeist, dass der Schweißstrom durch das Spindelhalteelement 14 und den Boden 100 fließt und sich am Übergang zwischen dem Spindelhalteelement 14 und dem Boden 100 eine solche Stromdichte einstellt, dass das Spindelhalteelement 14 und der Boden 100 bereichsweise aufgeschmolzen werden. Um eine günstige Stromeinspeisung zu bewirken, ist die erste Schweißelektrode 30 derart angepasst, dass eine beidseitige flächige Anlage zwischen der ersten Schweißelektrode 30 und dem Flächenabschnitt 140 des Spindelhalteelements 14 erhalten wird. Die zweite Schweißelektrode 31 kann demgegenüber beispielsweise flach ausgebildet sein, für eine flächige Anlage an dem Boden 100 rückseitig des Spindelhaltelements 14.

Bei der in Fig. 8 bis 13 dargestellten Schweißeinrichtung 3 weist die erste Schweißelektrode 30 eine Aufnahmeöffnung 300 nach Art eines Schlitzes auf, in der das Spindelhalteelement 14 zum Herstellen der Schweißverbindung 2 aufgenommen wird. Die Aufnahmeöffnung 300 ist beidseitig durch Elektrodenabschnitte 301, 302 begrenzt, die parallel zueinander erstreckt und axial entlang der Längsachse L (bezogen auf die mit dem Spindelhalteelement 14 bestimmungsgemäß zu verbindende Spindel 12) zueinander beabstandet sind derart, dass das Spindelhalteelement 14 zwischen den Elektrodenabschnitten 301, 302 aufgenommen werden kann.

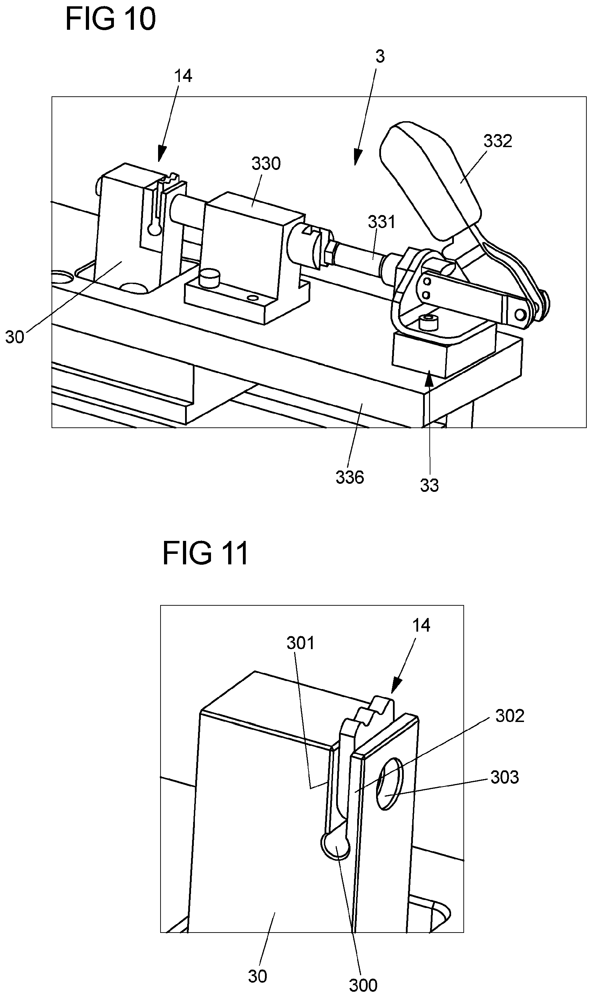

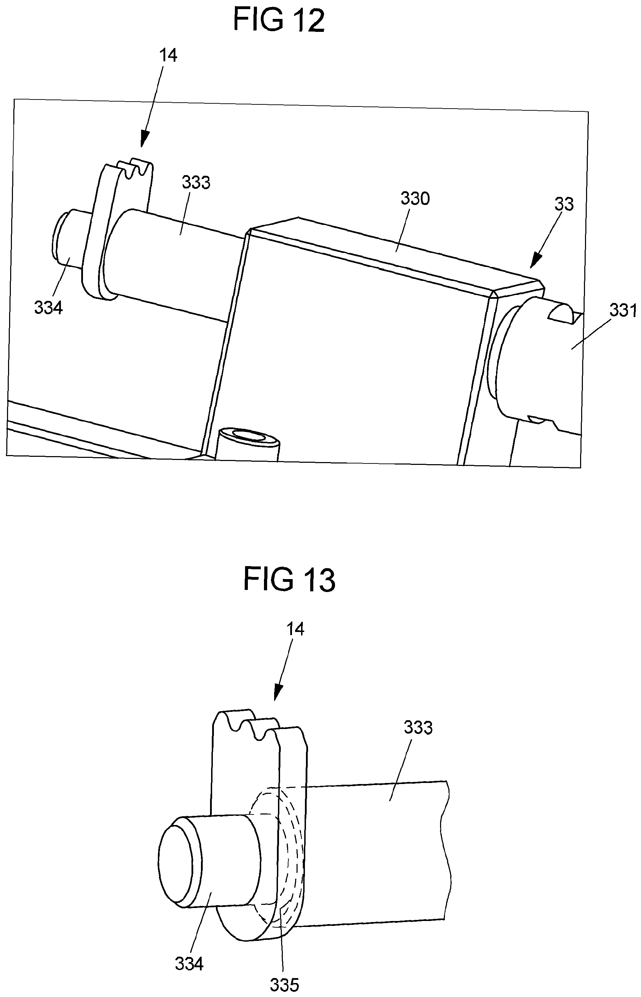

Zur Herstellung der Schweißverbindung 2 wird das Spindelhalteelement 14 in der Aufnahmeöffnung 300 der ersten Schweißelektrode 30 angeordnet und über eine Spanneinrichtung 33 an der ersten Schweißelektrode 30 fixiert. Dies erfolgt dadurch, dass ein in einem Lagerbock 330 geführter Spannbolzen 331 mit einem Schaftende 334 mit der Öffnung 341 des Spindelhalteelements 14 in Eingriff gebracht wird, sodass das Spindelhalteelement 14 in seiner Höhe zu der Schweißelektrode 30 festgelegt und über den Spannbolzen 331 an der Schweißelektrode 30 abgestützt ist. Das Schaftende 334 greift hierbei durch eine Öffnung 303 in dem Elektrodenabschnitt 302 hindurch und steht innerhalb der Aufnahmeöffnung 300 mit dem Spindelhaltelement 14 in Eingriff, wie dies aus einer Zusammenschau von Fig. 12 und 13 mit Fig. 10 und 11 ersichtlich ist.

Der Spannbolzen 331 kann über einen Spanngriff 332 so gespannt werden, dass die Elektrodenabschnitte 301, 302 einander angenähert werden und das Spindelhaltelement 14 somit zwischen den Elektrodenabschnitten 301, 302 verklemmt wird. Am Übergang zwischen dem Schaftende 334 und einem axial an das Schaftende 334 anschließenden Schaft 333 ist hierbei ein Anlageabschnitt 335 in Form einer umfänglich umlaufenden Stufe geformt, mit dem der Spannbolzen 331 auf den Elektrodenabschnitt 302 einwirkt und diesen relativ zu dem Elektrodenabschnitt 301 spannt.

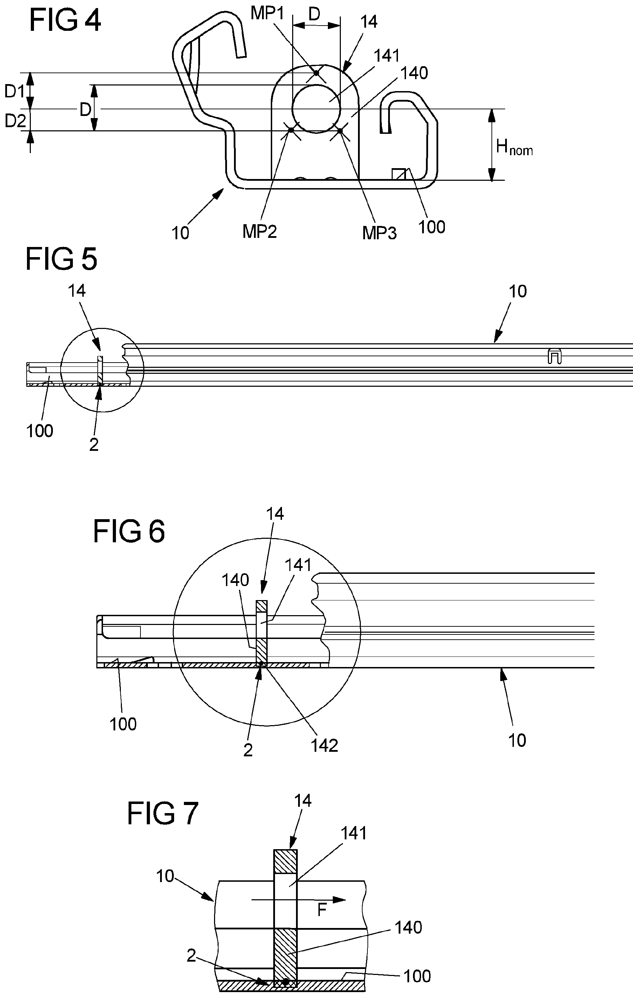

Über die Elektrodenabschnitte 301, 302 kann somit eine beidseitige Anlage der ersten Schweißelektrode 30 an einander abgewandten Seiten des Flächenabschnitts 140 des Spindelhalteelements 14 erreicht werden, sodass ein Schweißstrom beidseitig in den Flächenabschnitt 140 und damit in das Spindelhalteelement 14 eingeleitet werden kann. Auf diese Weise kann eine hochfeste Schweißverbindung zwischen dem Spindelhalteelement 14 und dem Boden 100 der Führungsschiene 10 hergestellt werden, die insbesondere axial entlang der Spindel 12 wirkenden Zugkräften F (siehe Fig. 7) im Betrieb der Längsverstellrichtung 1 widerstehen kann. Über das Spindelhalteelement 14 kann die Spindel 12 somit fest und belastbar mit der Führungsschiene 10 verbunden werden.

Die Spanneinrichtung 33 ist an einem Tisch 336 angeordnet, wie dies aus Fig. 10 ersichtlich ist. Die Führungsschiene 10 kann zur Verbindung mit dem Spindelhalteelement 14 an einem Stützelement 337, der ersten Schweißelektrode 30 und dem Lagerbock 330 aufgenommen werden, wie dies aus Fig. 9 ersichtlich ist, sodass durch Ansetzen der zweiten Schweißelektroden 31 rückseitig an den Boden 100 der Führungsschiene 10 die Schweißverbindung 2 hergestellt werden kann.

Während des Schweißprozesses werden die Buckelabschnitte 143 des Spindelhalteelements 14 und der Boden 100 dort, wo eine Anlage besteht, aufgeschmolzen, sodass sich das Spindelhalteelement 14 und der Boden 100 zueinander setzen. Nach Herstellung der Schweißverbindung ergibt sich eine stoffschlüssige Verbindung der Buckelabschnitte 143 des Spindelhalteelements 14 mit dem Boden 100.

Im Rahmen des Schweißprozesses werden das Spindelhalteelement 14 und der Boden 100 über die Schweißelektroden 30, 31 mit einer Anpresskraft aneinandergedrückt, und zudem wird ein Schweißstrom eingespeist. Die Haltezeit für die Anpresskraft und die Stromzeit des Schweißstroms sind hierbei üblicherweise nicht gleich, sondern die Anpresskraft kann zum Beispiel über einen längeren Zeitraum angelegt werden als der Schweißstrom. Nach Abschalten des Schweißstroms werden das Spindelhalteelement 14 und der Boden 100 somit noch für eine gewisse Zeit mit Kraft gegeneinander gedrückt, bis die Schweißverbindung 2 erhärtet ist.

Der Schweißprozess kann in gesteuerter Weise zum Beispiel abhängig von dem Abstand der Schweißelektroden 30, 31 zueinander erfolgen, um eine nominelle Höhe Hₙₒₘ des Spindelhalteelements 14 zu dem Boden 100 einzustellen, bezogen zum Beispiel auf die zentral durch die Öffnung 141 weisende Längsachse L, entlang derer die Spindel 12 bei fertig montierter Längsverstelleinrichtung 1 erstreckt ist. Beispielsweise kann der Abstand der Schweißelektroden 30, 31 zueinander, der korreliert ist mit der Höhenlage des Spindelhalteelements 14 zu dem Boden 100, als Abschaltkriterium verwendet werden. Wird beim Schweißen festgestellt, dass der Abstand der Schweißelektroden 30, 31 einen vorbestimmten Abstandswert erreicht hat und sich somit das Spindelhalteelement 14 und der Boden 100 bis auf eine gewünschte Höhenlage zueinander gesetzt haben, kann der Schweißstrom abgeschaltet und der Schweißprozess beendet werden.

Eine solche Steuerung kann bei der Serienfertigung erfolgen. Denkbar und möglich ist aber auch, anhand einer solchen Steuerung Prozessparameter im Rahmen einer initialen Kalibrierungsprozedur einzustellen, um sodann die spätere Serienfertigung anhand der eingestellten Prozessparameter ohne Steuerung anhand des Abstands der Schweißelektroden 30, 31 zueinander durchzuführen.

Die nominelle Höhe Hₙₒₘ des Spindelhalteelements 14 kann, wie aus Fig. 4 ersichtlich, beispielsweise anhand von Messpunkten MP1, MP2, MP3 gemessen werden. Die nominelle Höhe Hₙₒₘ ist bezogen auf den Mittelpunkt der Öffnung 141, die einen Durchmesser D aufweist, wobei dieser Mittelpunkt um einen Höhenabstand D1 zum Messpunkten MP1 oberhalb der Öffnung 141 und um einen Höhenabstand D2 zu den Messpunkten MP2, MP3 unterhalb der Öffnung 141 beabstandet ist, wie dies aus Fig. 4 ersichtlich ist.

Insbesondere können ein Spindelhalteelement oder auch zwei (oder mehr) Spindelhalteelemente zum Verbinden der Spindel mit einer zugeordneten Führungsschiene über ein Widerstandsschweißen der beschriebenen Art mit der zugeordneten Führungsschiene verbunden werden.

Die Spindelhalteelemente können auch anders als dargestellt ausgestaltet sein und können zum Beispiel eine Blockform oder dergleichen aufweisen.

### Bezugszeichenliste

- 1: Längsverstelleinrichtung
- 10: Führungsschiene (Unterschiene)
- 100: Boden
- 11: Führungsschiene (Oberschiene)
- 12: Spindel
- 120: Gewinde
- 13: Spindelhalteelement
- 14: Spindelhalteelement
- 140: Flächenabschnitt
- 141: Öffnung
- 142: Stirnkante
- 143: Buckelabschnitt
- 144: Zurückgesetzter Abschnitt
- 15: Verstellgetriebe
- 16: Fahrzeugsitz
- 2: Schweißverbindung
- 3: Schweißeinrichtung
- 30, 31: Schweißelektrode
- 300: Aufnahmeöffnung
- 301, 302: Elektrodenabschnitt
- 303: Öffnung
- 32: Steuereinrichtung
- 33: Spanneinrichtung
- 330: Lagerbock
- 331: Spannbolzen
- 332: Spanngriff
- 333: Schaft
- 334: Schaftende
- 335: Anlageabschnitt
- 336: Tisch
- 337: Stützelement
- D: Durchmesser
- D1, D2: Abstand
- F: Kraft
- Hₙₒₘ: Nominelle Höhe
- L: Längsachse
- MP1-MP3: Messpunkt

## Patentansprüche

1. Verfahren zum Verbinden eines Spindelhalteelements (14) mit einer Führungsschiene (10) zum Herstellen einer Längsverstelleinrichtung (1) für einen Fahrzeugsitz (16), wobei bei dem Verfahren das Spindelhaltelement (14) zum Befestigen einer Spindel (12) mit einem Wandungsabschnitt der Führungsschiene (10) stoffschlüssig verbunden wird,
**dadurch gekennzeichnet, dass** das Spindelhaltelement (14) unter Verwendung eines Widerstandsschweißverfahrens mit dem Wandungsabschnitt der Führungsschiene (10) verbunden wird,
wobei bei dem Widerstandsschweißverfahren eine erste Schweißelektrode (30) an das Spindelhalteelement (14) und eine zweite Schweißelektrode (31) an die Führungsschiene (10) angesetzt wird, um einen elektrischen Schweißstrom zwischen der ersten Schweißelektrode (30) und der zweiten Schweißelektrode (31) zu leiten,
wobei die erste Schweißelektrode (30) eine Aufnahmeöffnung (300) aufweist, in der das Spindelhalteelement (14) zum Einleiten des Schweißstroms aufgenommen wird.

2. Verfahren nach Anspruch 1, **dadurch gekennzeichnet, dass** die erste Schweißelektrode (30) an eine dem Wandungsabschnitt der Führungsschiene (10) abgewandte Seite des Spindelhalteelements (14) angesetzt wird.

3. Verfahren zum Verbinden eines Spindelhalteelements (14) mit einer Führungsschiene (10) zum Herstellen einer Längsverstelleinrichtung (1) für einen Fahrzeugsitz (16), wobei bei dem Verfahren das Spindelhaltelement (14) zum Befestigen einer Spindel (12) mit einem Wandungsabschnitt der Führungsschiene (10) stoffschlüssig verbunden wird,
**dadurch gekennzeichnet, dass** das Spindelhaltelement (14) unter Verwendung eines Widerstandsschweißverfahrens mit dem Wandungsabschnitt der Führungsschiene (10) verbunden wird,
wobei bei dem Widerstandsschweißverfahren eine erste Schweißelektrode (30) an das Spindelhalteelement (14) und eine zweite Schweißelektrode (31) an die Führungsschiene (10) angesetzt wird, um einen elektrischen Schweißstrom zwischen der ersten Schweißelektrode (30) und der zweiten Schweißelektrode (31) zu leiten,
wobei die erste Schweißelektrode (30) einen ersten Elektrodenabschnitt (301) und einen zweiten Elektrodenabschnitt (302) aufweist, zwischen denen das Spindelhalteelement (14) zum Einleiten des Schweißstroms derart angeordnet wird, dass der erste Elektrodenabschnitt (301) mit einer ersten Seite des Spindelhalteelements (14) und der zweite Elektrodenabschnitt (302) mit einer der ersten Seite abgewandten, zweiten Seite des Spindelhalteelements (14) in Anlage ist.

4. Verfahren nach Anspruch 3, **dadurch gekennzeichnet, dass** der erste Elektrodenabschnitt (301) und der zweite Elektrodenabschnitt (302) zur Anlage an dem Spindelhalteelement (14) über eine Spanneinrichtung (33) relativ zueinander miteinander gespannt werden.

5. Verfahren nach einem der vorangehenden Ansprüche, **dadurch gekennzeichnet, dass** die zweite Schweißelektrode (31) an eine dem Spindelhalteelement (14) abgewandte Seite des Wandungsabschnitts der Führungsschiene (10) angesetzt wird.

6. Verfahren nach einem der vorangehenden Ansprüche, **dadurch gekennzeichnet, dass** das Spindelhalteelement (14) einen Flächenabschnitt (140) mit einer daran angeordneten Stirnkante (142) aufweist, wobei das Spindelhalteelement (14) zum Verbinden stumpf mit der Stirnkante (142) an den Wandungsabschnitt der Führungsschiene (10) angesetzt wird.

7. Verfahren nach Anspruch 6, **dadurch gekennzeichnet, dass** das Spindelhalteelement (14) zumindest einen Buckelabschnitt (143) aufweist, der an der Stirnkante (142) geformt ist und über den eine Schweißverbindung (2) zwischen dem Spindelhalteelement (14) und dem Wandungsabschnitt der Führungsschiene (10) hergestellt wird.

8. Verfahren nach Anspruch 7, **dadurch gekennzeichnet, dass** das Spindelhalteelement (14) mehrere Buckelabschnitte (143) aufweist, die an der Stirnkante (142) geformt sind und über die die Schweißverbindung (2) zwischen dem Spindelhalteelement (14) und dem Wandungsabschnitt der Führungsschiene (10) hergestellt wird.

9. Verfahren nach einem der vorangehenden Ansprüche, **dadurch gekennzeichnet, dass** beim Verbinden eine nominelle Höhe (Hₙₒₘ) einer Öffnung (141) des Spindelhalteelements (14), die zum Befestigen der Spindel (12) an dem Spindelhalteelement (14) ausgebildet ist, relativ zum Wandungsabschnitt der Führungsschiene (10) eingestellt wird.

10. Verfahren nach einem der vorangehenden Ansprüche, **dadurch gekennzeichnet, dass** eine Stromzeit für das Widerstandsschweißverfahren auf einen Wert in einem Bereich zwischen 10 ms und 200 ms, vorzugsweise zwischen 30 ms und 100 ms, eingestellt wird.

11. Längsverstelleinrichtung (1) für einen Fahrzeugsitz (16), mit einer Führungsschiene (10), einer mit der Führungsschiene (10) verbundenen, entlang einer Längsachse (L) erstreckten Spindel (12) und einem Spindelhaltelement (14), über das die Spindel (12) mit der Führungsschiene (10) verbunden ist,
**dadurch gekennzeichnet, dass** das Spindelhaltelement (14) unter Verwendung eines Widerstandsschweißverfahrens mit einem Wandungsabschnitt der Führungsschiene (10) verbunden ist,
wobei das Spindelhalteelement (14) einen Flächenabschnitt (140) mit einer daran angeordneten Stirnkante (142) aufweist, wobei das Spindelhalteelement (14) mit der Stirnkante (142) stumpf an den Wandungsabschnitt der Führungsschiene (10) angesetzt ist.

12. Längsverstelleinrichtung (1) nach Anspruch 11, **dadurch gekennzeichnet, dass** das Spindelhalteelement (14) mehrere Buckelabschnitt (143) aufweist, die an der Stirnkante (142) geformt sind und über die eine Schweißverbindung (2) zwischen dem Spindelhalteelement (14) und dem Wandungsabschnitt der Führungsschiene (10) hergestellt ist.

## Claims

1. A method of connecting a spindle holding element (14) to a guide rail (10) for producing a longitudinal adjustment device (1) for a vehicle seat (16), wherein in the method the spindle holding element (14) is cohesively connected to a wall portion of the guide rail (10) for fastening a spindle (12),
**characterized in that** the spindle holding element (14) is connected to the wall portion of the guide rail (10) by using a resistance welding method,
wherein in the resistance welding method a first welding electrode (30) is attached to the spindle holding element (14) and a second welding electrode (31) is attached to the guide rail (10) in order to conduct an electric welding current between the first welding electrode (30) and the second welding electrode (31),
wherein the first welding electrode (30) includes a receiving opening (300) in which the spindle holding element (14) is received for introducing the welding current.

2. The method according to claim 1, **characterized in that** the first welding electrode (30) is attached to a side of the spindle holding element (14) facing away from the wall portion of the guide rail (10).

3. A method of connecting a spindle holding element (14) to a guide rail (10) for producing a longitudinal adjustment device (1) for a vehicle seat (16), wherein in the method the spindle holding element (14) is cohesively connected to a wall portion of the guide rail (10) for fastening a spindle (12),
**characterized in that** the spindle holding element (14) is connected to the wall portion of the guide rail (10) by using a resistance welding method,
wherein in the resistance welding method a first welding electrode (30) is attached to the spindle holding element (14) and a second welding electrode (31) is attached to the guide rail (10) in order to conduct an electric welding current between the first welding electrode (30) and the second welding electrode (31),
wherein the first welding electrode (30) includes a first electrode portion (301) and a second electrode portion (302), between which the spindle holding element (14) is arranged for introducing the welding current such that the first electrode portion (301) is in abutment with a first side of the spindle holding element (14) and the second electrode portion (302) is in abutment with a second side of the spindle holding element (14) facing away from the first side.

4. The method according to claim 3, **characterized in that** the first electrode portion (301) and the second electrode portion (302) are tensioned with each other relative to each other via a tensioning device (33) for abutment against the spindle holding element (14).

5. The method according to any of preceding claims, **characterized in that** the second welding electrode (31) is attached to a side of the wall portion of the guide rail (10) facing away from the spindle holding element (14).

6. The method according to any of the preceding claims, **characterized in that** the spindle holding element (14) includes a surface portion (140) with a front edge (142) arranged thereon, wherein for connecting purposes the spindle holding element (14) is bluntly attached to the wall portion of the guide rail (10) with the front edge (142).

7. The method according to claim 6, **characterized in that** the spindle holding element (14) includes at least one hump portion (143) which is formed at the front edge (142) and via which a welding connection (2) between the spindle holding element (14) and the wall portion of the guide rail (10) is produced.

8. The method according to claim 7, **characterized in that** the spindle holding element (14) includes a plurality of hump portions (143) which are formed at the front edge (142) and via which the welding connection (2) between the spindle holding element (14) and the wall portion of the guide rail (10) is produced.

9. The method according to any of the preceding claims, **characterized in that** on connection a nominal height (Hₙₒₘ) of an opening (141) of the spindle holding element (14), which is configured for fastening the spindle (12) to the spindle holding element (14), is set relative to the wall portion of the guide rail (10).

10. The method according to any of the preceding claims, **characterized in that** a current time for the resistance welding method is set to a value in a range between 10 ms and 200 ms, preferably between 30 ms and 100 ms.

11. A longitudinal adjustment device (1) for a vehicle seat (16), comprising a guide rail (10), a spindle (12) which is connected to the guide rail (10) and extends along a longitudinal axis (L), and a spindle holding element (14) via which the spindle (12) is connected to the guide rail (10),
**characterized in that** the spindle holding element (14) is connected to a wall portion of the guide rail (10) by using a resistance welding method,
wherein the spindle holding element (14) includes a surface portion (140) with a front edge (142) arranged thereon, wherein the spindle holding element (14) is bluntly attached to the wall portion of the guide rail (10) with the front edge (142).

12. The longitudinal adjustment device (1) according to claim 11, **characterized in that** the spindle holding element (14) includes a plurality of hump portions (143) which are formed at the front edge (142) and via which a welding connection (2) between the spindle holding element (14) and the wall portion of the guide rail (10) is produced.

## Revendications

1. Procédé de raccordement d'un élément de maintien de broche (14) à un rail de guidage (10) pour fabriquer un dispositif de réglage longitudinal (1) pour un siège de véhicule (16), dans lequel procédé l'élément de maintien de broche (14) est relié par liaison de matière à une partie de paroi du rail de guidage (10) pour fixer une broche (12),
**caractérisé en ce que** l'élément de maintien de broche (14) est relié à la partie de paroi du rail de guidage (10) en utilisant un procédé de soudage par résistance,
dans lequel, dans le procédé de soudage par résistance, une première électrode de soudage (30) est appliquée à l'élément de maintien de broche (14) et une deuxième électrode de soudage (31) est appliquée au rail de guidage (10) pour conduire un courant électrique de soudage entre la première électrode de soudage (30) et la deuxième électrode de soudage (31),
dans lequel la première électrode de soudage (30) présente une ouverture de réception (300) dans laquelle l'élément de maintien de broche (14) est reçu pour introduire le courant de soudage.

2. Procédé selon la revendication 1, **caractérisé en ce que** la première électrode de soudage (30) est appliquée sur un côté de l'élément de maintien de broche (14) opposé à la partie de paroi du rail de guidage (10).

3. Procédé de raccordement d'un élément de maintien de broche (14) à un rail de guidage (10) pour fabriquer un dispositif de réglage longitudinal (1) pour un siège de véhicule (16), dans lequel procédé l'élément de maintien de broche (14) est relié par liaison de matière à une partie de paroi du rail de guidage (10) pour fixer une broche (12),
**caractérisé en ce que** l'élément de maintien de broche (14) est relié à la partie de paroi du rail de guidage (10) en utilisant un procédé de soudage par résistance,
dans lequel, dans le procédé de soudage par résistance, une première électrode de soudage (30) est appliquée à l'élément de maintien de broche (14) et une deuxième électrode de soudage (31) est appliquée au rail de guidage (10) pour conduire un courant électrique de soudage entre la première électrode de soudage (30) et la deuxième électrode de soudage (31),
la première électrode de soudage (30) présentant une première section d'électrode (301) et une deuxième section d'électrode (302) entre lesquelles l'élément de maintien de broche (14) est agencé pour introduire le courant de soudage de telle sorte que la première section d'électrode (301) est en contact avec un premier côté de l'élément de maintien de broche (14) et la deuxième section d'électrode (302) avec un deuxième côté de l'élément de maintien de broche (14) opposé au premier côté.

4. Procédé selon la revendication 3, **caractérisé en ce que** la première section d'électrode (301) et la deuxième section d'électrode (302) sont serrées l'une contre l'autre par rapport à l'élément de maintien de broche (14) au moyen d'un dispositif de serrage (33).

5. Procédé selon l'une quelconque des revendications précédentes, **caractérisé en ce que** la deuxième électrode de soudage (31) est appliquée sur un côté de la partie de paroi du rail de guidage (14) opposé à l'élément de maintien de broche (14).

6. Procédé selon l'une quelconque des revendications précédentes, **caractérisé en ce que** l'élément de maintien de broche (14) présente une partie de surface (140) avec un bord frontal (142) agencé sur celle-ci, l'élément de maintien de broche (14) étant appliqué contre la partie de paroi du rail de guidage (10) pour être relié bout à bout avec le bord frontal (142).

7. Procédé selon la revendication 6, **caractérisé en ce que** l'élément de maintien de broche (14) présente au moins une partie bombée (143) qui est formée sur le bord frontal (142) et par laquelle une liaison soudée (2) entre l'élément de maintien de broche (14) et la partie de paroi du rail de guidage (10) est réalisée.

8. Procédé selon la revendication 7, **caractérisé en ce que** l'élément de maintien de broche (14) présente plusieurs parties bombées (143) qui sont formées sur le bord frontale (142) et par lesquelles la liaison soudée (2) entre l'élément de maintien de broche (14) et la partie de paroi du rail de guidage (10) est réalisée.

9. Procédé selon l'une quelconque des revendications précédentes, **caractérisé en ce que**, lors du raccordement, une hauteur nominale (Hₙₒₘ) d'une ouverture (141) de l'élément de maintien de broche (14), qui est configurée pour fixer la broche (12) à l'élément de maintien de broche (14), est réglée par rapport à la partie de paroi du rail de guidage (10).

10. Procédé selon l'une quelconque des revendications précédentes, **caractérisé en ce qu'**un temps de courant pour le procédé de soudage par résistance est réglé à une valeur dans une plage comprise entre 10 ms et 200 ms, de préférence entre 30 ms et 100 ms.

11. Dispositif de réglage longitudinal (1) pour un siège de véhicule (16), comprenant un rail de guidage (10), une broche (12) reliée au rail de guidage (10) et s'étendant le long d'un axe longitudinal (L), et un élément de maintien de broche (14) par lequel la broche (12) est reliée au rail de guidage (10),
**caractérisé en ce que** l'élément de maintien de broche (14) est relié à une partie de paroi du rail de guidage (10) en utilisant un procédé de soudage par résistance,
l'élément de maintien de broche (14) présentant une partie de surface (140) avec un bord frontal (142) agencé sur celle-ci, l'élément de maintien de broche (14) étant appliqué contre la partie de paroi du rail de guidage (10) pour être relié bout à bout avec le bord frontal (142).

12. Dispositif de réglage longitudinal (1) selon la revendication 11, **caractérisé en ce que** l'élément de maintien de broche (14) présente plusieurs parties bombées (143) qui sont formées sur le bord frontale (142) et par lesquelles la liaison soudée (2) entre l'élément de maintien de broche (14) et la partie de paroi du rail de guidage (10) est réalisée.
